# EUROPEAN PATENT APPLICATION

(11) **EP 1 522 919 A2**
(43) Date of publication of application: **13.04.2005**
(21) Application number: 04019992.9
(22) Date of filing: 23.08.2004
(51) Int. Cl.: G06F 9/44

(54) **Information-processing apparatus, method, program, and a medium for file operation**

(30) Priority: 22.08.2003 JP 2003299154; 14.07.2004 JP 2004207573
(71) Applicant: Ricoh Company Ltd., Tokyo 143-8555 (JP)
(72) Inventor: Matsuishi, Takaya, Kawasaki-shi, Kanagawa-ken (JP)
(74) Representative: Schwabe - Sandmair - Marx

(57) **Abstract**

An information-processing apparatus connected to a terminal through a network and including a network interface and a processing unit. The processing unit is configured to select a target file to be operated on from electronic files stored in the terminal and to provide a prescribed web page to the terminal through the network. The prescribed web page displays an area for selecting an operation item from multiple operation items to be executed on the target file. The processing unit is also configured to select an operation for the target file based on the operation item selected using the prescribed web page.

## Description

### CROSS-REFERENCE TO RELATED APPLICATIONS

This application is based on Japanese patent applications No. 2003-299154, filed on August 22, 2003, and No. 2004-207573, filed on July 14, 2004, the entire contents of which are hereby incorporated by reference.

### BACKGROUND OF THE INVENTION

### FIELD OF THE INVENTION

The present invention relates to an information-processing apparatus for executing various types of operations on a file, and to a method and program product for file operation.

### DESCRIPTION OF THE RELATED ART

A document management system is well known as a tool for efficiently managing a large amount of document information in an office setting. By electronically managing document information using a document management system, it is possible to promote a paperless office and to quickly locate desired documents.

Document management systems in recent years have been made progressively multifunctional. Some of these systems seek cooperation with not only the functions of executing registration, updates, or searches of document information, but also the functions of executing various types of operations related to document data, such as printing, delivery, data format conversion, and facsimile (or "fax") transmission These functions are referred to as "document operation functions" below.

Using such a system, a user may directly operate printing of a document without downloading the document from a document database to a client terminal, such as a personal computer (PC). This operation is described in Japanese Laid-Open patent Publication No. 2003-280832. However, in this system, only document data that is registered in the document database of the document management system can be operated upon by users.

Accordingly, to execute a document operation function on a local file stored in a file system at a client terminal side (e.g., in a PC), a user must first register the local file as document data in the document database of the document management system This operation can not only be complicated for a user, but can also be unnecessary, especially if the local file does not need to be stored in the document database for access by other users, for example. Deletion of the local file from the document database after the desired print operation is also time-consuming. Further, the document database must be provided with sufficient memory capacity to facilitate the temporary storage of local files for printing purposes.

### SUMMARY OF THE INVENTION

The object of the present invention is to provide an information-processing apparatus configured to execute a file operation on a file stored in a client terminal connected to the apparatus without requiring the registration of the file to the memory device of a document management sever. The present invention also provides a method and a program product to perform such a file operation.

According to an aspect of the present invention, an information-processing apparatus provides a web page to a client terminal through a network. The information-processing apparatus includes a processing unit that selects a target file to be operated from electronic files stored in the terminal and provides a prescribed web page including an area for selecting an operation item from multiple operation items to be executed on the target file with the terminal The processing unit also selects an operation for the target file from the terminal based on the prescribed web page.

Using the above-described information-processing apparatus, it is possible to execute an operation for a file stored in a client terminal without registering the file in the document management server. Furthermore, other aspects of the present invention provide a method of using the information-processing apparatus and a program product for controlling a computer to execute the method.

These and other objects, features, and advantages of the present invention will become apparent upon consideration of the following description of the preferred embodiments of the present invention, taken in conjunction with the accompanying drawings.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings.

Fig. 1 is a schematic view of a document management system in accordance with an aspect of the present invention

Fig. 2 is a structural block diagram of the web server of Fig. 1.

Fig. 3 is a functional block diagram of the web server of Fig. 1.

Fig. 4 is a chart sequence illustrating a process of printing a local file in accordance with an aspect of the present invention.

Figs. 5A-5C collectively are an explanatory view of a portal page in accordance with an aspect of the present invention.

Fig. 6 is an explanatory view of a file dialog in accordance with an aspect of the present invention.

Fig. 7 is an explanatory view of a local file selected in a file dialog in accordance with an aspect of the present invention.

Figs. 8A-8C collectively are an explanatory view of a portal page reflected in selecting a local file in accordance with an aspect of the present invention.

Figs. 9A-9C collectively are an explanatory view of the selection of an operation item to be operated to the target file in accordance with an aspect of the present invention.

Fig. 10 is an explanatory view of a printing condition setting page in accordance with an aspect of the present invention.

Fig. 11 is an explanatory view of a printing finish notifying page in accordance with an aspect of the present invention.

Fig. 12 is a sequence chart illustrating a process of delivering a local file in accordance with an aspect of the present invention.

Figs. 13A-13C collectively are an explanatory view of the selection of a delivery operation in accordance with an aspect of the present invention.

Fig. 14 is an explanatory view of a address setting page in accordance with an aspect of the present invention.

Fig. 15 is an explanatory view of a setting of an address in accordance with an aspect of the present invention.

Fig. 16 is an explanatory view of a determination of the selected address as a destination in accordance with an aspect of the present invent ion.

Fig. 17 is an explanatory view of a delivery finish notifying page in accordance with an aspect of the present invention.

Fig. 18 is a schematic view of a document management system in accordance with an aspect of the present invention.

### DETAILED DESCRIPTION OF THE PREFERRED EMBODIMENTS

Referring now to the drawings, wherein like reference numerals designate identical or corresponding parts throughout the several views. In describing preferred embodiments illustrated in the drawings, specific terminology is employed for the sake of clarity.
However, the disclosure of this patent specification is not intended to be limited to the specific terminology so selected, and it is to be understood that each specific element includes all technical equivalents that operate in a similar manner.

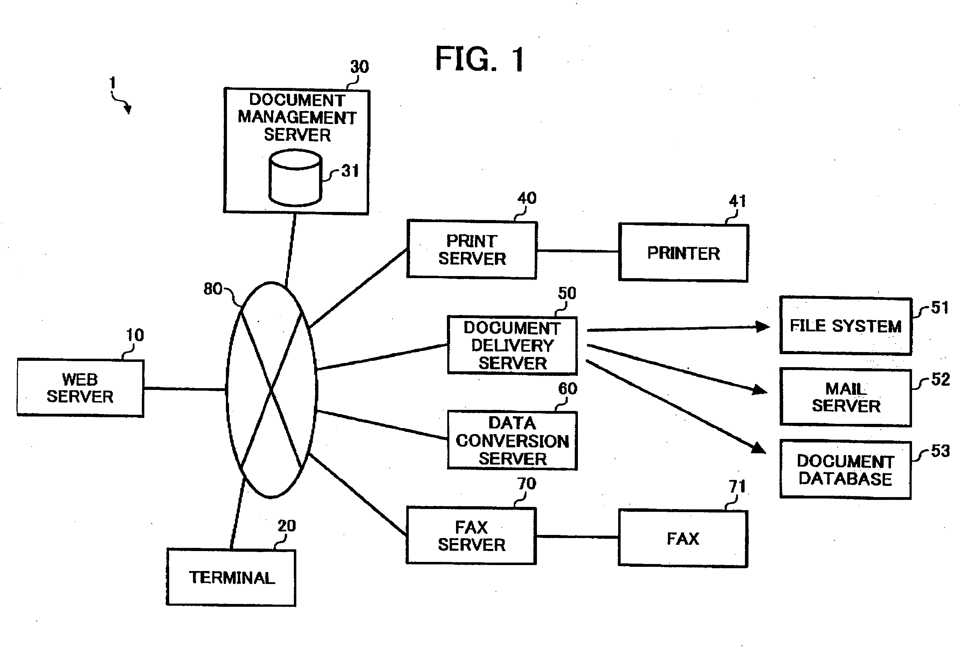

Fig. 1 illustrates a document management system 1 including a web server 10 (e.g., an information-processing apparatus), a client terminal 20, a document management server 30, a print server 40, a delivery server 50, a data conversion server 60, and a fax server 70. Each system component is connected to each other through a network 80, which can be arranged as the Internet or a LAN, for example. The network may be a wired network or a wireless network.

The web server 10 is a computer configured to provide a web page indicating information requested by the terminal 20. Terminal 20 is a client terminal, such as a PC, a personal digital assistant (PDA), or a communication terminal (e.g., a cell phone). A web page is generally a structured document described by a prescribed language for display, such as a data format of HTML, XML, CHTML (Compact HTML), or WML (Wireless Markup Language), which may be displayed with a known browser, for example. The web server 10 controls the document server 30, the print server 40, the delivery server 50, the data conversion server 60, or the fax server 70 to execute a process requested through a provided web page.

The document management server 30 is a computer providing a function such as registration, search, or update of document information (e.g., main data and attribute information of document data) stored in the document database 31 as a web service (e.g., document management service) through the network 80. Each function of the document server 30 may be called out by a remote procedure call (RPC) according to the Simple Object Access Protocol (SOAP). For example, the document management server 30 can create a list of documents for retrieving list information of document data stored in any folder in the document database 31, which is publicly accessible on the network 80.

The print server 40 is a computer providing print function of the printer 41 through the network 80 as a web service (e.g., print service). The function of the print server 40 may be called out by RPC of SOAP. For example, the print server 40 can receive print instructions for a printer, such as the printer 41, which is publicly accessible on the network 80.

The delivery server 50 is a computer providing the function of delivering a file as a web service (e.g., delivery service) on the network 80. The delivery function is a function of sending data such as a file to an appointed address. The address is, for example, a file system in a prescribed computer, a mail server 52, or a document database 53. The function of the delivery server 50 may be called out by RPC of SOAP. For example, the delivery server 50 can receive a delivery request over the network 80.

The data conversion server 60 is a computer providing conversion or archive to TIFF, BITMAP, JPEG, PDF, or TEXTS formats as a web service (e.g., data conversion service) on the network 80. The function of the data conversion server 60 may be called out by RPC of SOAP. For example, the data conversion server 60 can receive a request of data format conversion over the network 80.

The fax server 70 is a computer providing a function of facsimile transmission of a fax 71 through the network 80 as a web service. The fax server 70 can receive a request of facsimile transmission over the network 80.

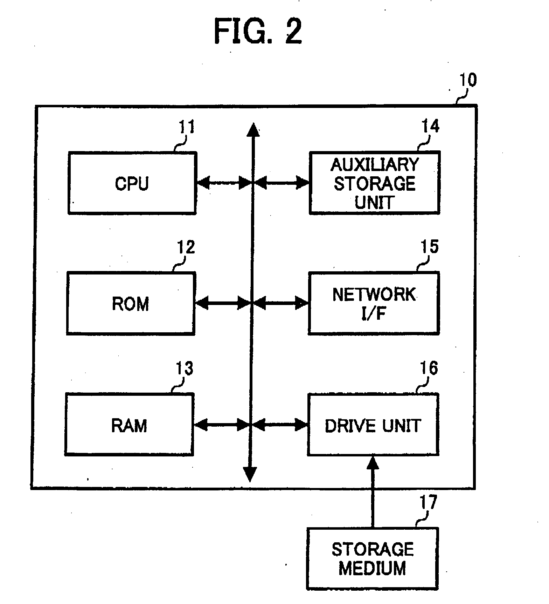

Next, referring to Fig. 2, a detailed description of the web server 10 is provided. The web server 10 includes a CPU 11, a ROM 12, a RAM 13, an auxiliary storage unit 14, a network interface (I/F) 15, and a drive unit 16.

The CPU 11 is a controller unit controlling the web server 10 as a whole. The CPU 11 controls the information-processing apparatus, communication, data acquisition, and data compilation by executing various control programs and application programs stored in the ROM 12 or the auxiliary storage unit 14.

The ROM 12 is a memory unit primarily storing a control program The RAM 13 is, for example, a cache memory for the CPU 11, which is a memory unit configured for temporary data storage. The auxiliary storage unit 14 is a memory unit storing various application programs and data.

The network I/F 15 is an interface for connecting the web server 10 to the network 80. The drive unit 16 is a unit for reading out a computer readable storage medium 17, such as a CD-ROM, storing the program for carrying out a characteristic process in an embodiment of the present invention. In addition, an operation unit and a display unit are not shown in Fig. 2, but the web server 10 may include an operation unit, such as a keyboard or a mouse, and a display unit, such as a liquid crystal display or a cathode-ray tube display. In this way, data input from a user can be received and operational results can be displayed.

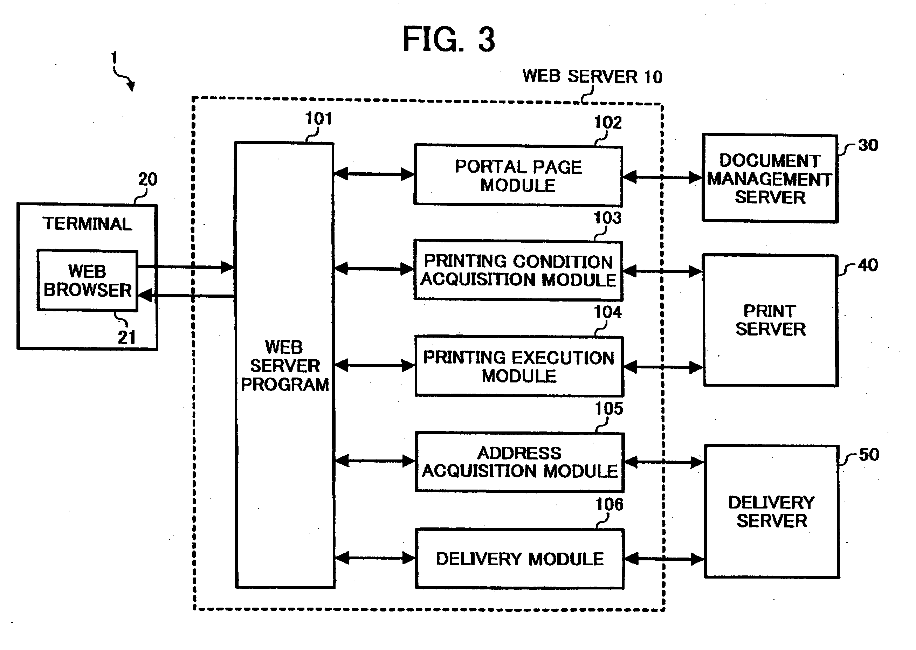

Referring to the functional block diagram of Fig. 3, the web server 10 includes a web server program 101, a portal page module 102, a printing condition acquisition module 103, a printing execution module 104, an address acquisition module 105, and a delivery execution module 106. The web server program 101 and the modules 102-106 are run by the CPU 11.

The web server program 101 can be arranged as a program called HTTPd (HTTP daemon) and is a program for causing the web server 10 to operate as a web server. In other words, the web server program 101 receives an HTTP request from the terminal 20 and calls various web applications, such as the portal page module 102, corresponding to the request from the terminal 20. Then, the web server program 101 sends a web page output by the called web application to the terminal 20 as an HTTP response.

The portal page module 102 is a web application for generating an entrance web page to the document management system 1. The entrance web page is hereinafter referred to as "a portal page" and is displayed when a user logs into the document management system 1. The display area of the portal page is divided into plural areas, as described later, and information frequently utilized by a user, such as a list of document data managed by the document management server 30, is displayed in each area.

The printing condition acquisition module 103 is a web application for generating a web page for setting a printing condition associated with the printing of a file. This web page is hereinafter referred to as "a printing condition setting page." The printing execution module 104 is a web application for causing the printer server 40 to execute a print job of a file depending on a print request sent from the terminal 20, based on the printing condition setting page.

The address acquisition module 105 is a web application for generating a web page for setting an address delivering a file. This web page is hereinafter referred to as "an address setting page." The delivery execution module 106 is a web application for causing the delivery server 50 to execute delivery of a file depending on a delivery request sent from the terminal 20, based on the address setting page.

In addition, a fax application causing the fax server 70 to execute a facsimile transmission can be implemented, and a data conversion application causing the data conversion server 60 to execute a data conversion can be implemented.

Hereinafter, the procedures of the document management system 1 will be described with reference to Fig. 3.

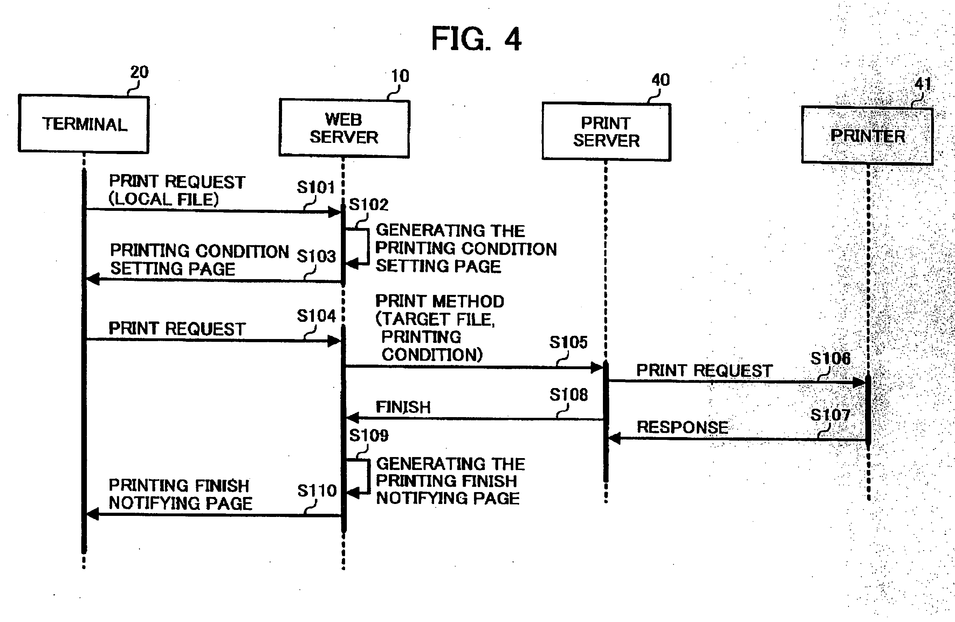

Fig. 4 is an explanatory sequence chart illustrating a process of printing a local file in the document management system 1. The term "local file" refers to an electronic file stored in the terminal 20. For example, the local file is stored in the file system of the document management system 1.

In step S101, a user of the terminal 20 selects a local file to be printed on the portal page opened in the web browser 21 (Fig. 3). When printing of the local file is instructed, the web browser 21 in the terminal 20 sends an HTTP request for printing the selected local file with the selected local file to the web server 10, which receives the HTTP request with the network I/F 15.

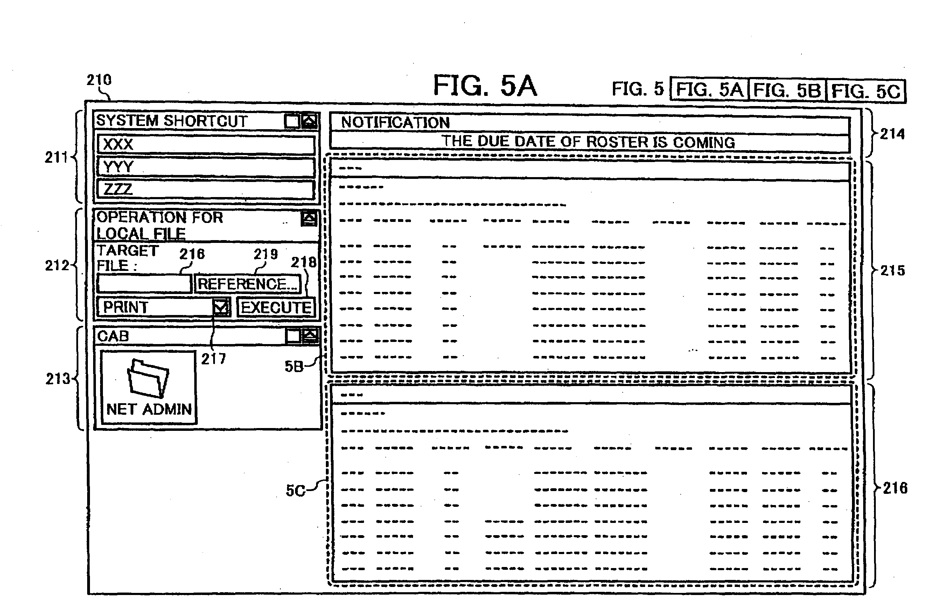

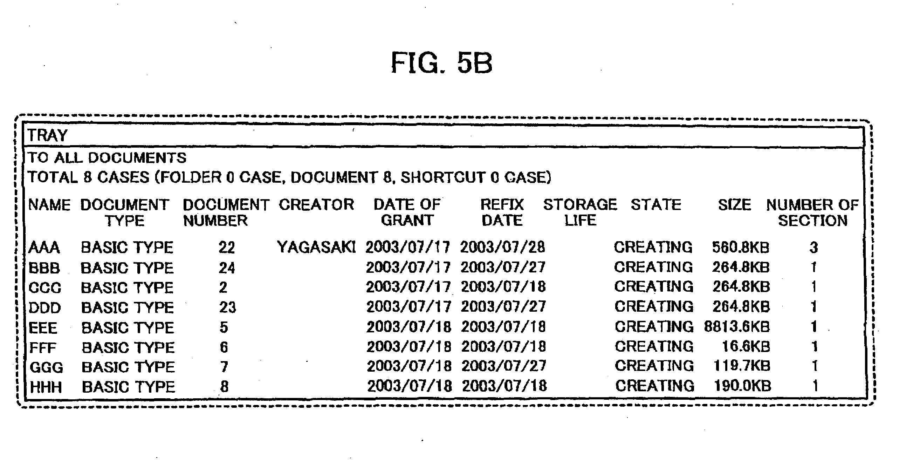

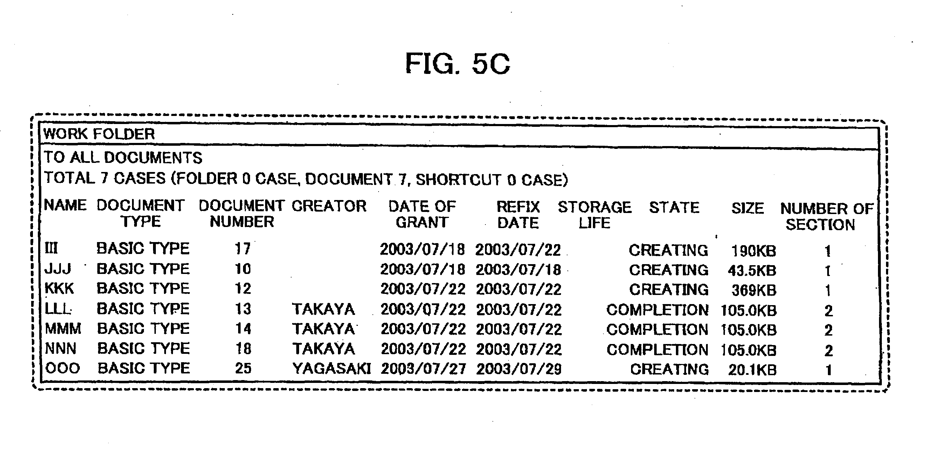

Figs. 5A-5C illustrate an explanatory view of a portal page. As shown in Fig. 5A, the portal page 210 has plural divided areas, which include a shortcut display area 211, a local file operation area 212, a cabinet display area 213, a message display area 214, a document list area 215, and a work folder display area 216.

The shortcut display area 211 is an area displaying a list of links (e.g., shortcuts) to various web pages frequently accessed by a user. The local file operation area 212 is an area for selecting a local file to be operated and for selecting an operation item for execution of an operation to a local file. The cabinet display area 213 is an area displaying a link, arranged as an icon, to the prescribed cabinet in the document database 31 of the document management server30. The message display area 214 is an area displaying a message to a user. The document list area 215 is an area displaying a list of document data in the prescribed folder in the document database 31. The work folder display area 216 is an area displaying a list of document data in the personal folder in the document database 31. A user may instruct a print order, a delivery order, a conversion order, or a fax transmission order to the document data selected in the document list display area 215 or the work folder display area 216.

The local file operation area 212 will be described in detail. The local file operation area 212 includes a reference button 219, a target file name display area 216, a combo box 217, and an execution button 218. When the reference button 219 is clicked, the file dialog for selecting a local file is displayed.

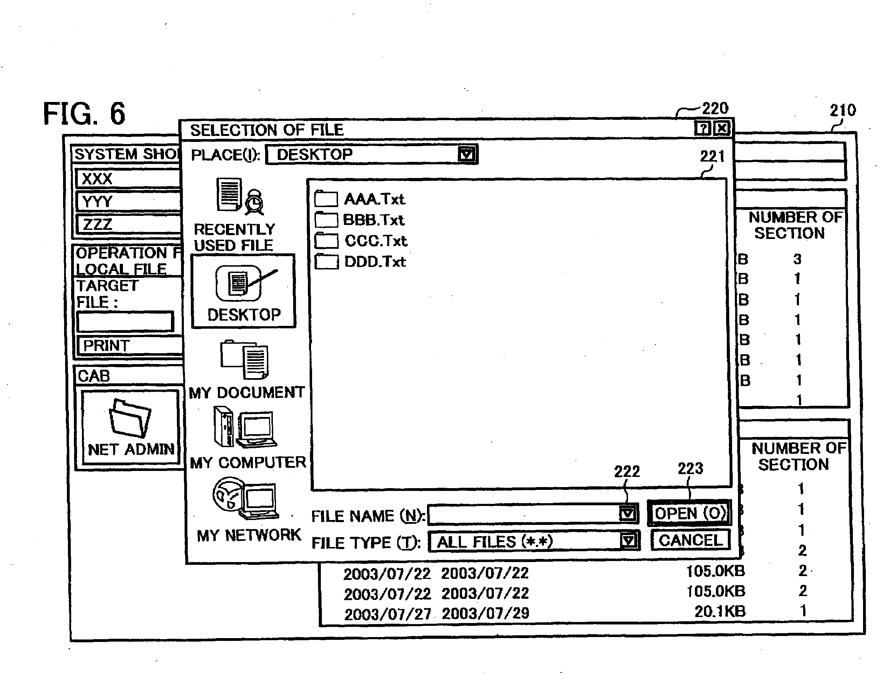

Fig. 6 is an explanatory view of a file dialog. As shown in Fig. 6, the file dialog 220 includes the same user interface as a commonly-used file dialog, including a file selection area 221, a file name display area 222, and an OPEN button 223.

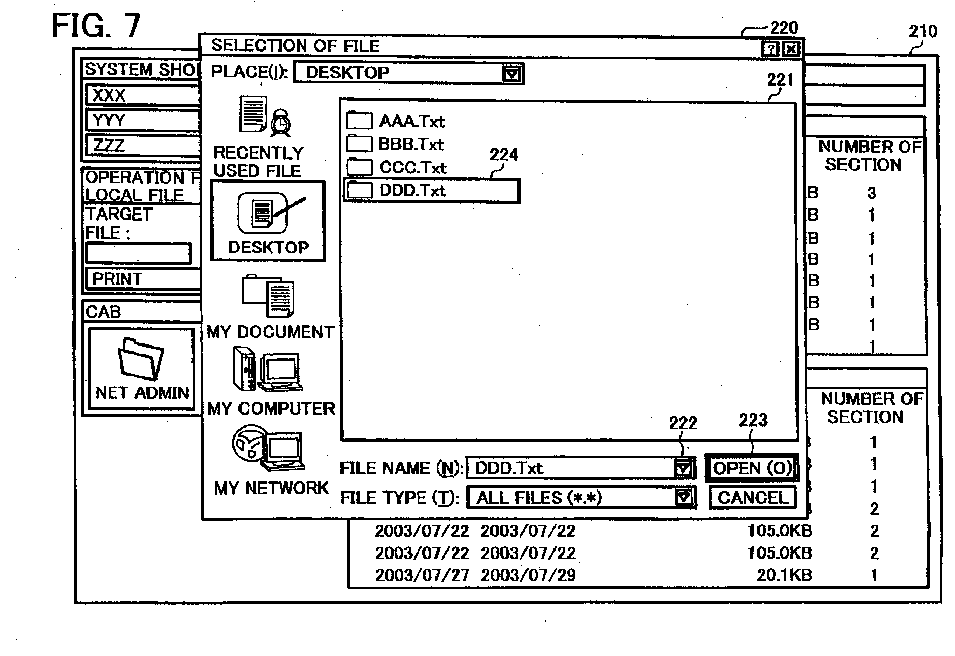

Fig. 7 is an explanatory view of a local file selected in the file dialog As shown in Fig. 7, when a local file is selected in the file selection area 221, the file name 224 of the selected local file, hereinafter called "a target file," is highlighted, and the file name of the target file is displayed in the file name display area 222. When the OPEN button 223 is clicked when the file dialog is in this state, the selection of the target file is reflected in the local file operation area 212 of the portal page 210.

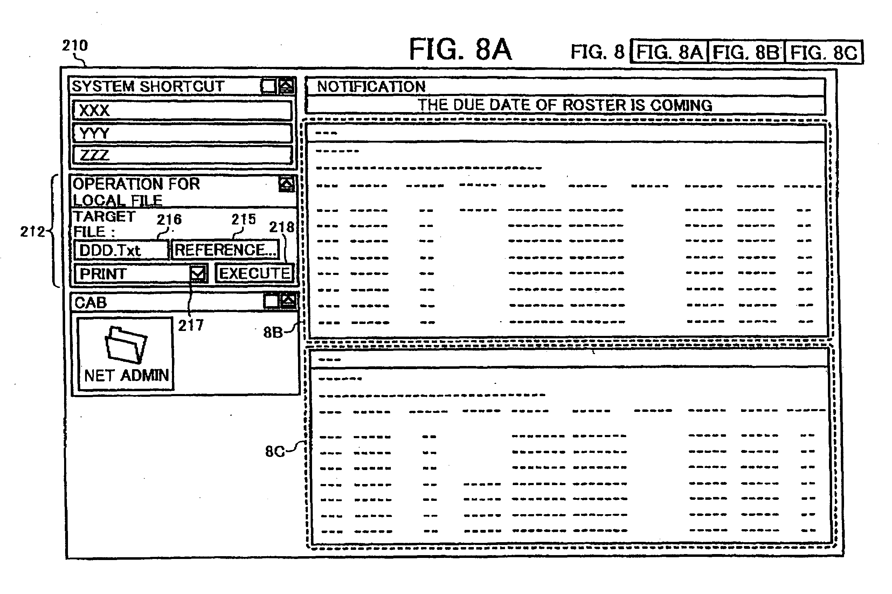

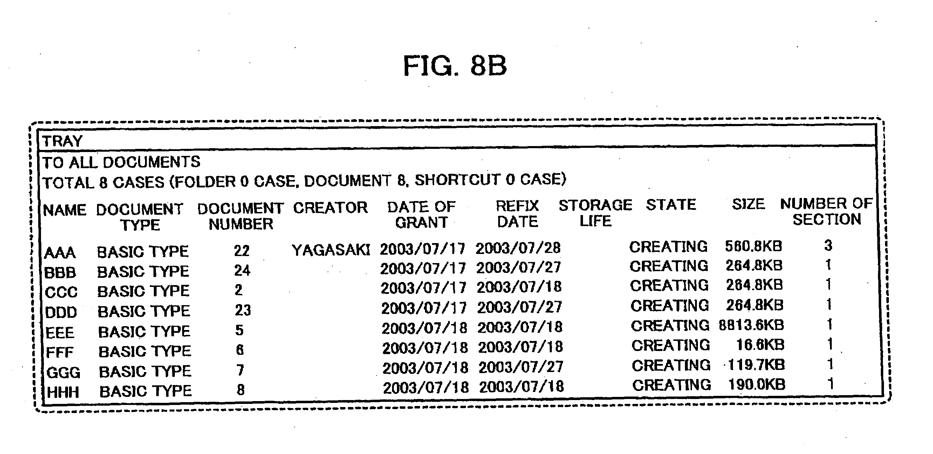

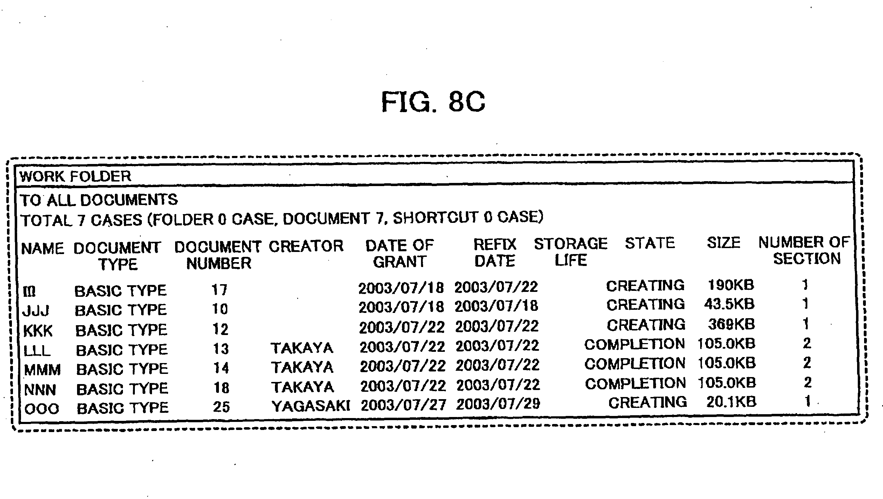

Figs. 8A-8C illustrate an explanatory view of a portal page reflected in selecting a local file. As shown in Figs. 8A-8C, the file name of the target file is displayed in the target file name display area 216 of the local file operation area 212. The operation items to be operated to the target file may be selected by using the combo box 217.

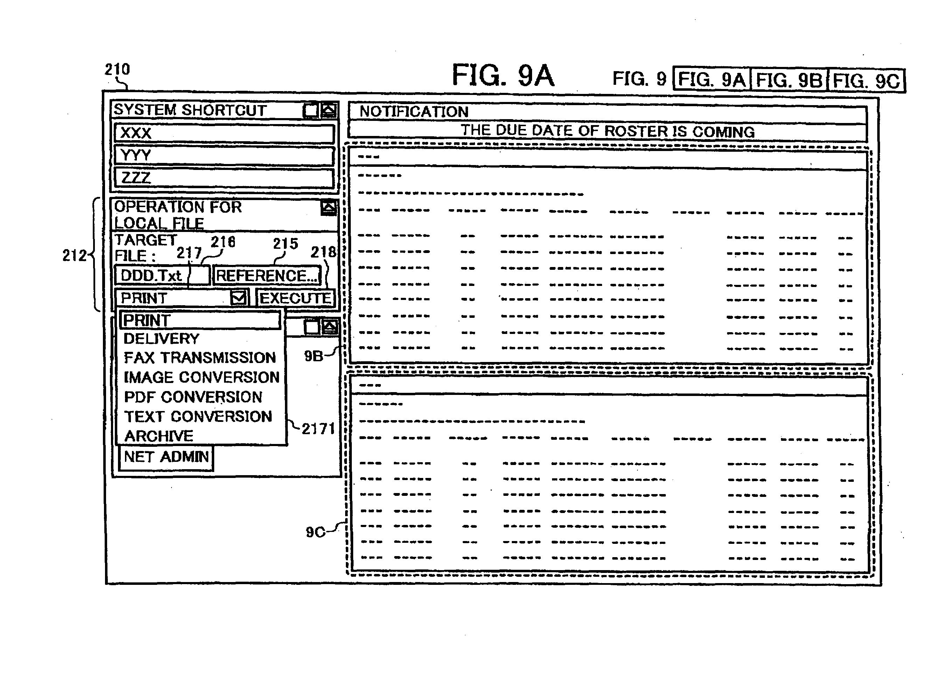

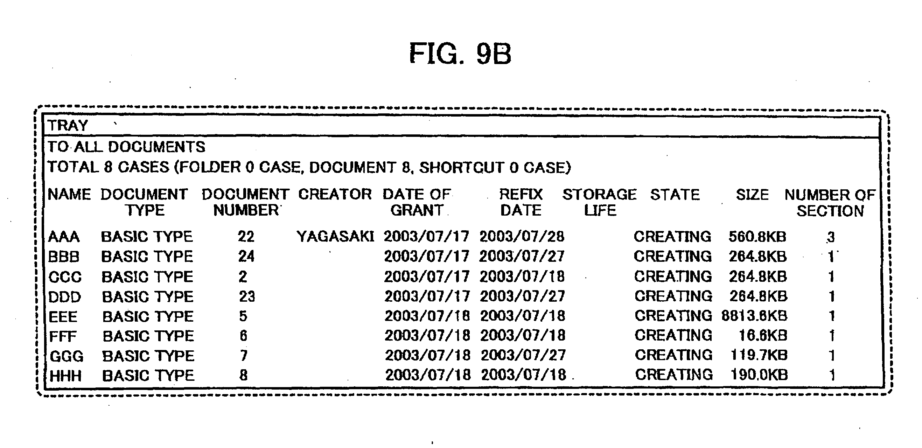

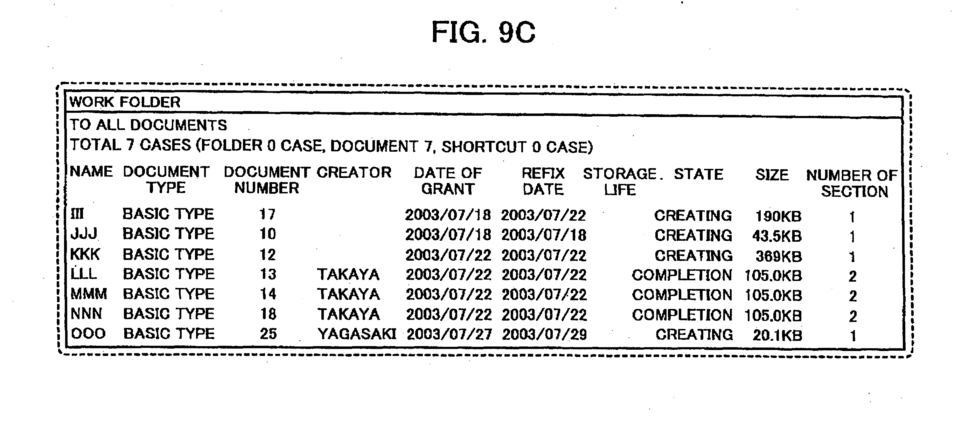

Figs. 9A-9C illustrate the selection ofan operation item to be operated on the target file. As shown in Figs. 9A-9C, a list 217 is displayed by opening the combo box 217. In the list 217, the candidates of operation items to be executed to the target file (for example, print, delivery, fax transmission, image conversion, PDF conversion, text conversion, or archive) are displayed. For example, if "print" is selected in the list 217 and the execution button 218 is clicked, the above-mentioned process of step S101 is executed.

Next, in step S102 (referring to Fig. 4), when the printing condition acquisition module 103 is called by the web sever program 101 receiving an HTTP request from the web browser 21, the printing condition acquisition module 103 temporarily stores the target file received with the HTTP request (e.g., in RAM 13 shown in Fig. 2), generates a printing condition setting page, and outputs the printing condition setting page to the web server program 101.

In step S103, when the web server program 101 sends the printing condition setting page to the terminal 20, the printing condition setting page is displayed by the web browser 21.

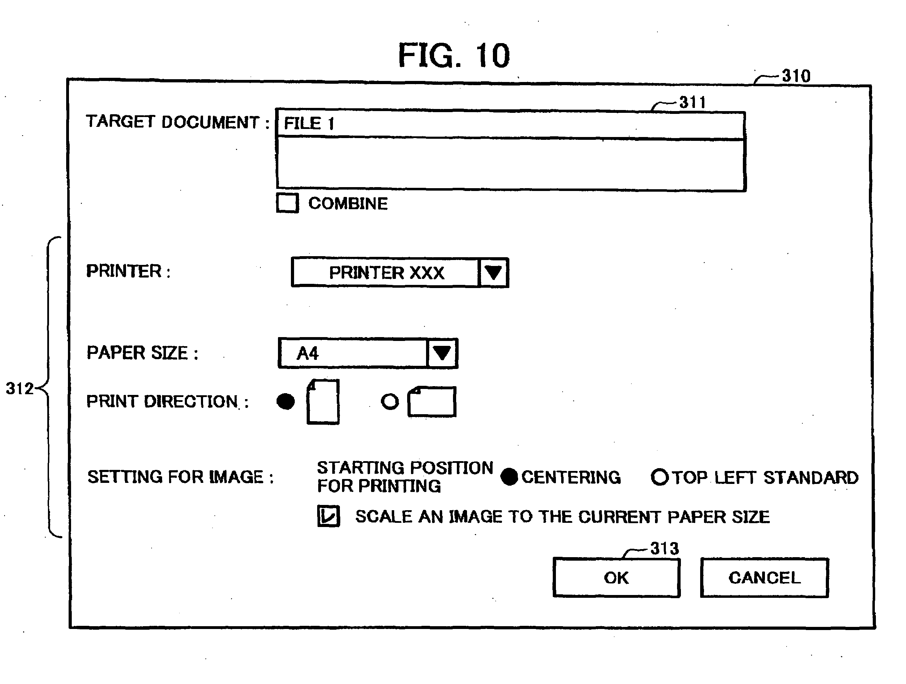

Fig. 10 illustrates an example ofa printing condition setting page. The printing condition setting page 310 includes a target file display area 311 and a printing condition setting area 312. The file name of the target file selected as a print object in the portal page is displayed in the target file display area 311. In the printing condition setting area 312, it is possible to, for example, select a printer and set a paper size, a print direction, and a starting position for printing. When a user sets a printing condition in the printing condition setting page 310 and clicks the OK button 313, the web browser 21 sends the print request based on the print condition (e.g., HTTP request) to the web server 10 (step S104 in Fig. 4).

Next, in step S105, when the printing execution module 104 is called by the web server program 101 receiving the print request from the web browser 21, the printing execution module 104 transmits a request to print the target file to the print server 40 by calling the printing method in the print server 40 using RPC of SOAP. In addition, actual data and a printing condition of the target file temporarily stored in the web server 10 is specified as an argument of the printing method. Furthermore, the target file temporarily stored in the web server 10 may be deleted after the print request is sent to the print server 20.

In step S 106, the print server 40 requests the printing of the target file to the printer 41 specified as a printing condition. The printer 41 executes printing of the target file based on the print request. When the print server 40 receives a response from the printer 41 (step S107), the print server 40 sends the SOAP response indicating the print finished message of the target file (step S108).

Next, in step S109, the printing execution module 104 generates a web page for displaying a message indicating the completion of a print operation, based on the SOAP response from the print server 40. This web page is hereinafter referred to as "the printing finish notifying page" and is outputted to the web server program 101. In step S 110, when the web server program 101 sends the printing finish notifying page to the terminal 20, the printing finish notifying page is displayed by the web browser 21.

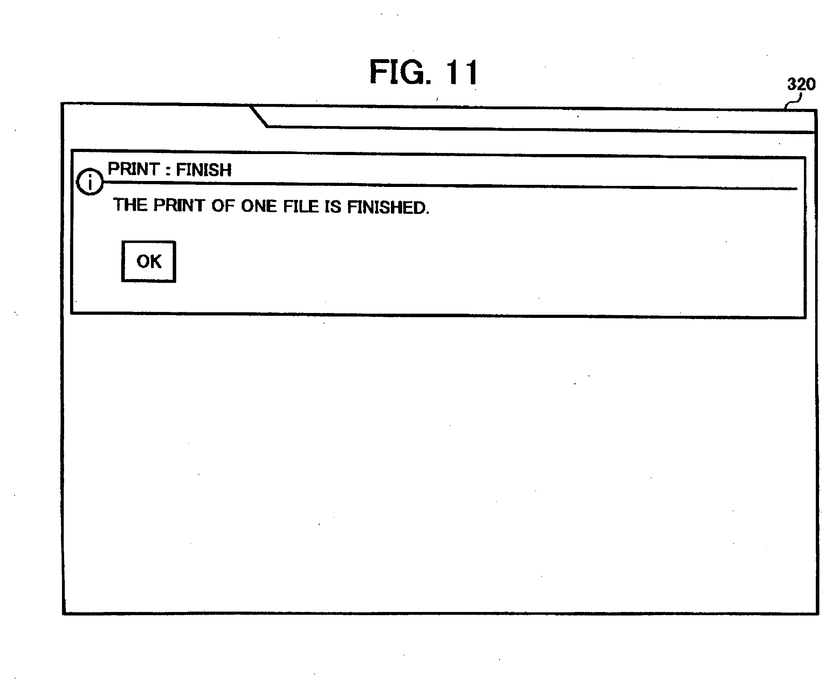

Fig. 11 illustrates an example of a printing finish notifying page. As shown in Fig. 11, the message indicating the completion of target file printing is displayed on the printing finish notifying page 320. A user may confirm that the print of the target file is properly executed by referring to the printing finish notifying page 320.

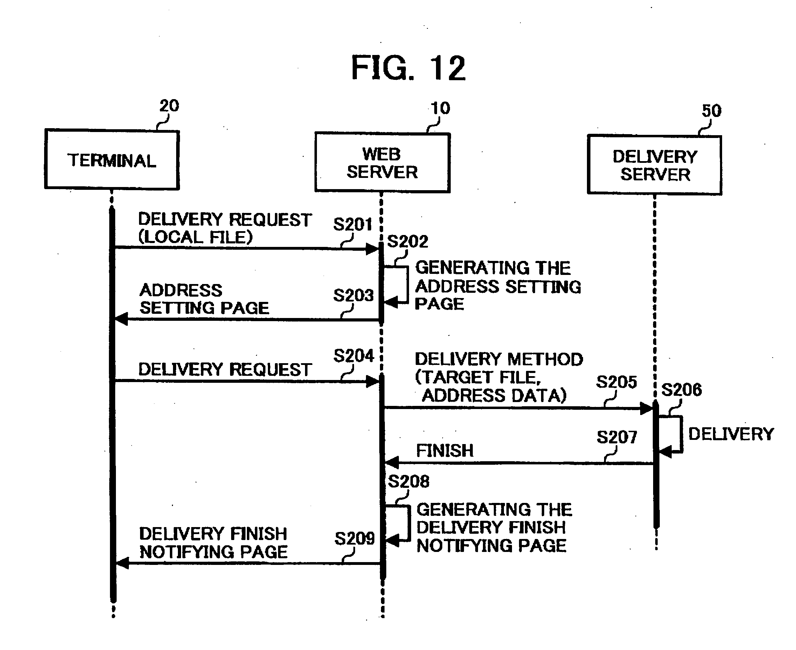

Next, a situation in which "delivery" is selected as an operation for the local file is described. Fig. 12 is an explanatory sequence chart illustrating the process of delivering a local file.

In step S201 of Fig. 12, when a user at the terminal 20 selects a local file to be delivered in the local file operation area 212 of the portal page 210 and instructs the delivery of the selected local file, the web browser 21 sends the HTTP request for delivering the selected local file with the selected local file to the web server 10. The selection of the target file in the portal page 210 is performed in a process similar to that of the above-mentioned printing process. The instruction of delivery is done by selecting "delivery" in the combo box 217 and clicking the execution button 218.

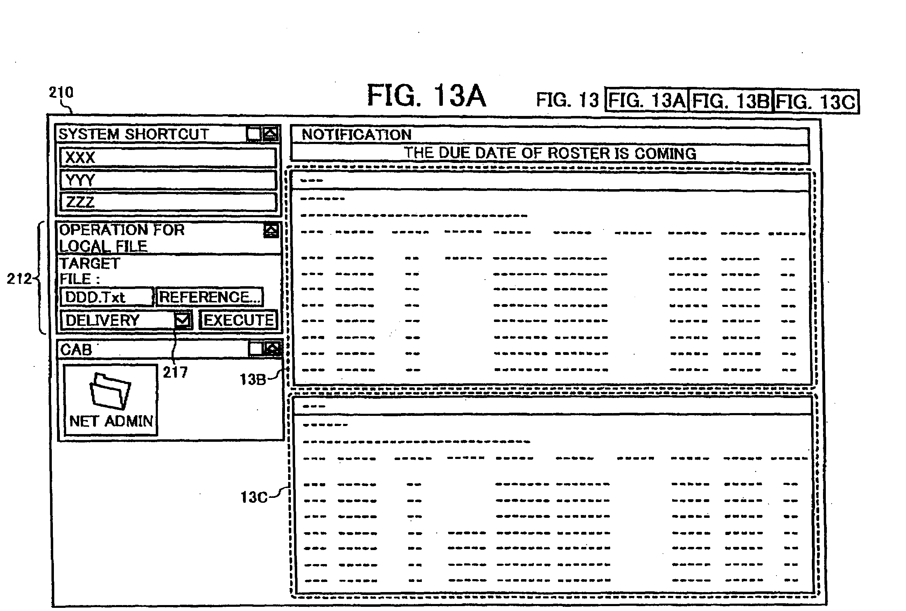

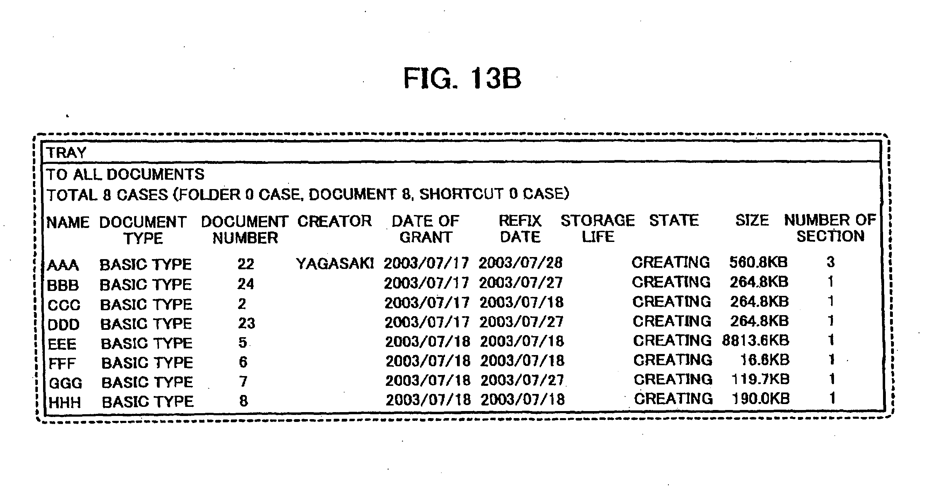

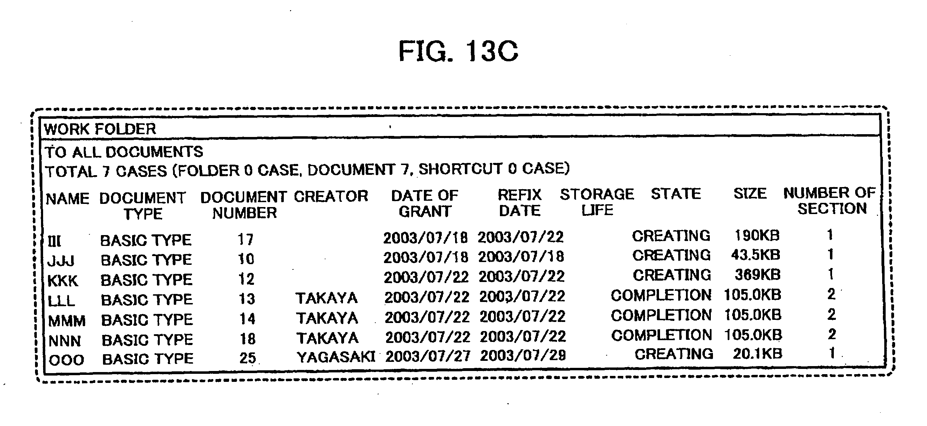

Figs. 13A-13C illustrate the selection of a delivery operation As shown in Figs. 13A-13C, the operation "delivery" is displayed in the combo box 217 of the local file operation area 212 on the portal page 210.

Next, in step S202 of Fig. 12, when the address acquisition module 105 is called by the web server program 101 receiving the HTTP request from the web browser 21, the address acquisition module 105 temporarily stores the target file received with the HTTP request, generates an address setting page, and outputs the address setting page to the web server program 101.

In step S203 of Fig. 12, when the web server program 101 sends the address setting page to the terminal 20, the address setting page is displayed by the web browser 21.

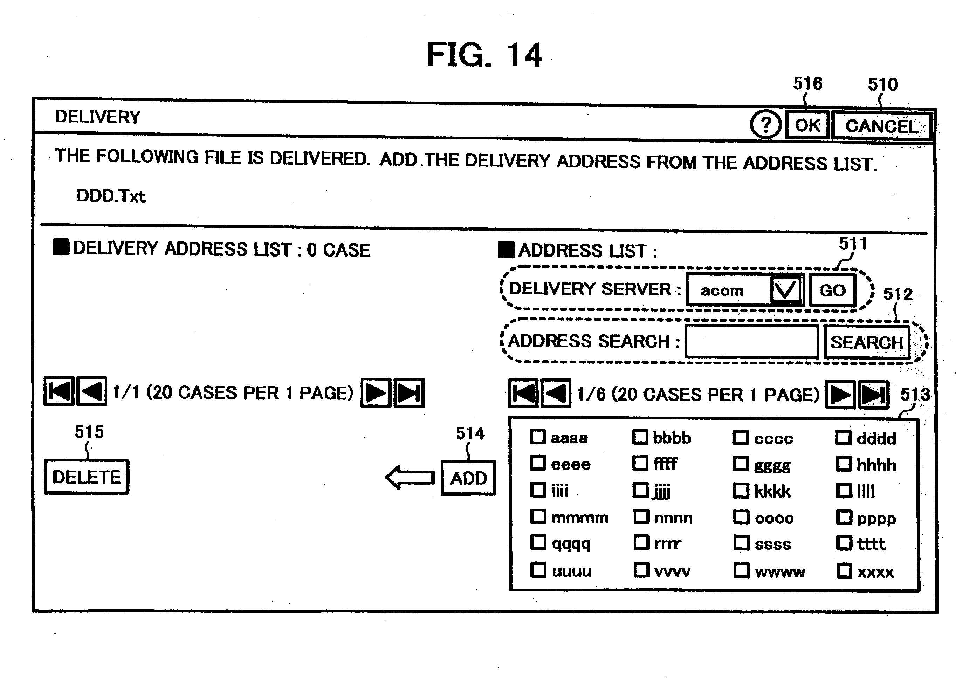

Fig. 14 an example of an address setting page. The address setting page 51 shown in Fig. 14 includes a delivery server selecting area 511, an address searching area 512, an address list area 513, an address addition button 514, an address deletion button 515, and an OK button 516.

The delivery server selecting area 511 is an area for selecting a delivery server executing the delivery process. In addition, one delivery server (e.g., the delivery server 50) is shown in Fig. 1 for the sake of simplicity. However, plural delivery servers may be connected to the network 80, in which case it is possible to select a delivery to be used for practical purposes among the plural delivery servers.

The address searching area 512 is an area for searching for an address. The address list area 513 is an area for displaying a list of selective addresses. A check button is assigned to each address displayed in the address list area 513. It is possible to select an address for the target file by checking the corresponding check button.

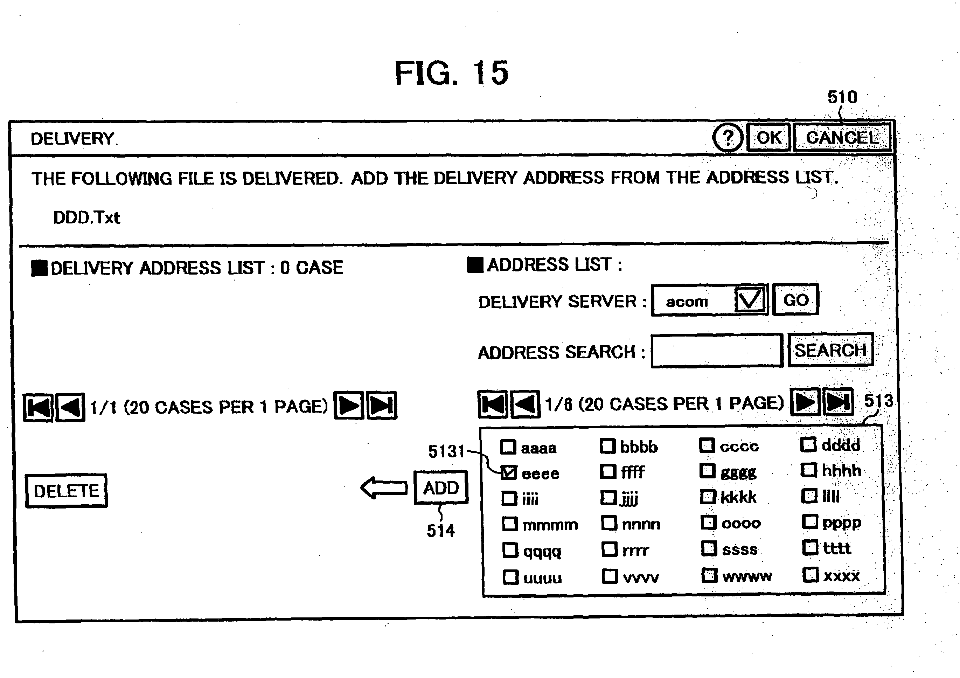

Fig. 15 illustrates the setting of an address. By checking a desired check button in the address list area 513 of the address setting page 510, the address 5131 is selected. In this state, when the address addition button 514 is clicked, the selected address 5131 is determined as a destination.

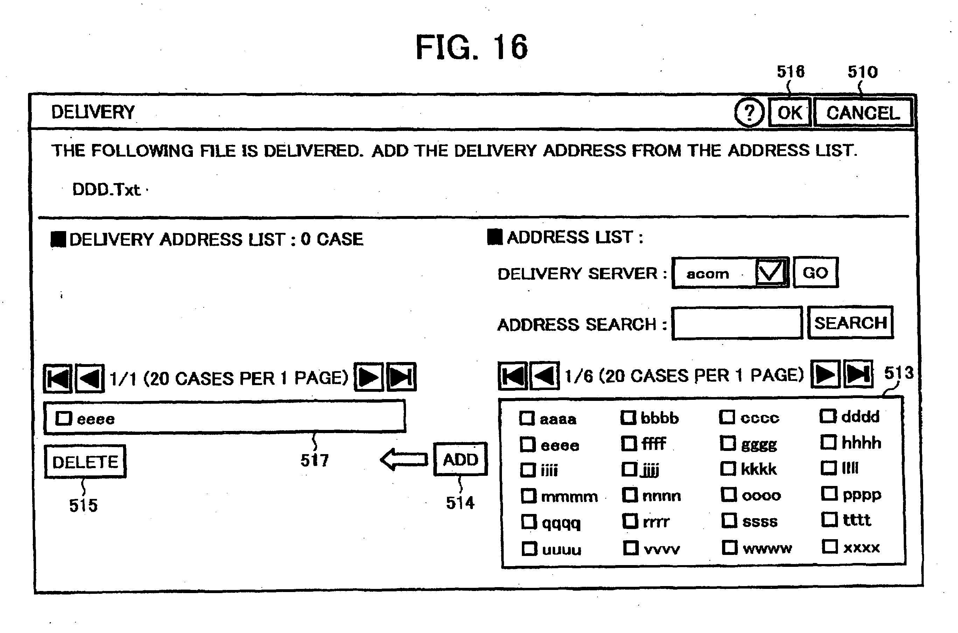

Fig. 16 illustrates determining the selected address as a destination. As shown in Fig.16, the address determined as a destination is added in the delivery address list 517. In addition, each address in the delivery address list 517 is assigned to a check button. The delivery address may be deleted by checking the corresponding check button and clicking the address deletion button 515.

When the OK button 516 is clicked after the delivery address is determined, the web browser 21 sends a delivery request (e.g., an HTTP request) for the determined address to the web server 10 (step S204).

Next, in step S205 of Fig. 12, when the delivery execution module 106 is called by the web server program 101 receiving a delivery request from the web browser 21, the delivery execution module 106 requests a delivery of the target file to the delivery server 50 by calling the delivery method in the delivery server 50 using RPC of SOAP. In addition, actual data and the address data of the target file temporarily stored in the web server 10 is specified as the argument of the delivery method.

Next, in step S206, the delivery server 50 executes the delivery of the target file to the instructed address, then sends a SOAP response indicating the delivery finish of the target file to the web server 10 (step S207).

Next, in step S208, the delivery execution module 106 generates a web page for notifying the delivery finished massage. The web page is hereinafter referred to as "the delivery finish notifying page" and is based on the SOAP response from the delivery server 50. The delivery finish notifying page is outputted to the web server program 101. In step S209, when the web server program 101 sends the delivery finish notifying page to the terminal 20, the delivery finish notifying page is displayed by the web browser 21.

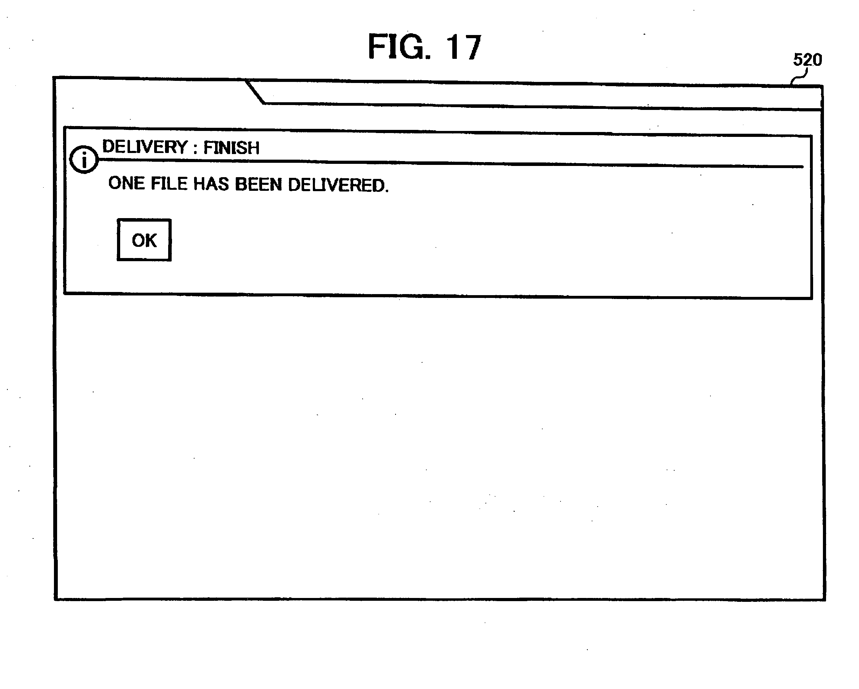

Fig. 17 shows an example of a delivery finish notifying page. As shown in Fig.17, a message indicating the delivery finish is displayed in the delivery finish notifying page 520. A user may confirm that the delivery of target file is normally executed by referring to the delivery finish notifying page 520.

According to the above-mentioned document management system 1 of the present embodiment, it is possible to perform various web services for the local file (e.g., the target file) stored in the terminal 20 without registering the local file in the document database 31. Registration entails, for example, storing data in a hard disk for a long period of time. Thus, temporary storing of data in a memory of the web server 10, such as the random-access memory 13, is excluded from the meaning of "registration."

Further, it is possible to carry on the operation of local file through a web page such as the portal page 210 (Figs. 8A-8C) from a general-purpose terminal with a web browser. In addition, a web page such as a portal page or a home page is constantly displayed in the web browser. The local file operation area 212 for operating a local file is displayed with other information in the portal page 210. Therefore, it is possible to instruct an operation of the local file without displaying a new web page.

The present invention is not to be considered limited to the above-described "printing" and "delivery" operations. For example, "data conversion" may be executed by the data conversion server 60 and "fax transmission" may be executed by the fax server 70.

Some embedded devices configured to perform specialized functions can also operate as web servers. For example, a multi-function printer including plural applications such as print, copy, and facsimile can correspond to such an embedded device. Some image processing apparatuses, such as multi-function printers, can perform the functions of a web server along with the accumulated function of obtaining document data from copy data or received facsimile data. Thus, the document management system 1 of the present embodiment may include such an image processing apparatus.

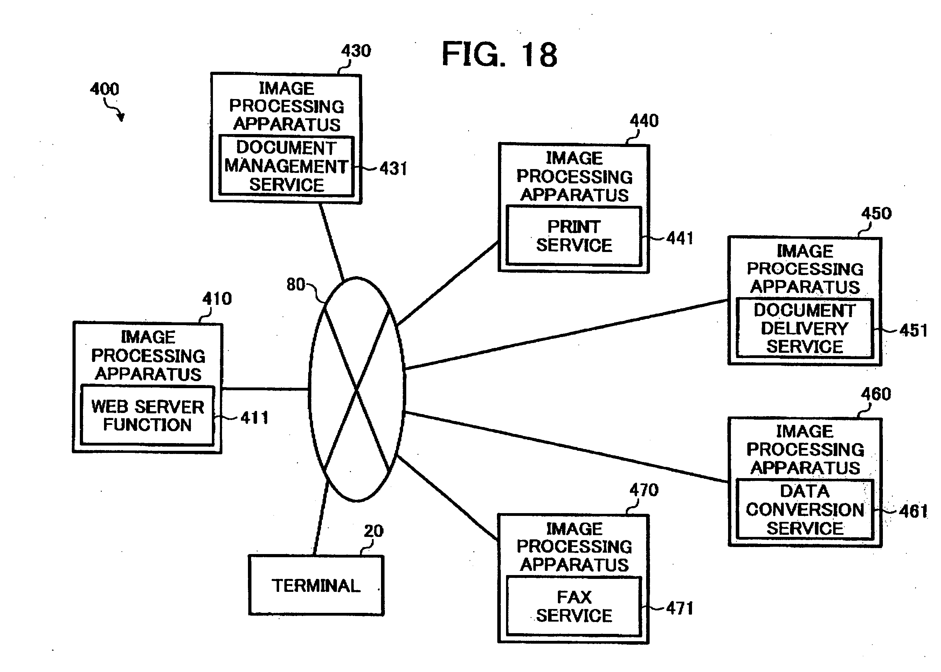

Fig. 18 illustrates an example ofa document management system including multiple image processing apparatuses. Fig. 18 refers to the equivalent numerals of Fig. 1.
Comparing Fig. 1 with Fig. 18, the document management system 400 in Fig. 18 includes image processing apparatuses 410, 430, 440, 450, 460, and 470 instead of the web server 10, the document management server 30, the print server 40, the delivery server 50, the data conversion server 60, and the FAX server 70 illustrated in Fig. 1.

The image processing apparatus 410 includes the functions implemented in the web server 10, that is, the web server program 101, the portal page module 102, the printing condition acquisition module 103, the printing execution module 104, the address acquisition module 105, and the delivery execution module 106.

The image processing apparatuses 430, 440, 450, 460, and 470 include a document management service 431, a print service 441, a delivery service 451, a data conversion service 461, and a fax service 471, which perform the same services implemented in the document management server 30, the print server 40, the delivery server 50, the data conversion server 60, and the fax server 70 shown in Fig. 1. The image processing apparatus 410 operates in a way similar to the web server 10, and the image processing apparatus 430 operates in a way similar to the document management server 30. The image processing apparatus 440 operates in a way similar to the print server 40, and the image processing apparatus 450 operates in a way similar to the delivery server 50. The image processing apparatus 460 operates in a way similar to the data conversion server 60, and the image processing apparatus 470 operates in a way similar to the fax server 70.

In addition, the document management service, the print service, the delivery service, the fax service are the functions associated with the image processing apparatus. As shown in Fig. 18, each function is divided in each image processing apparatus; however, a single image processing apparatus may include all or some of these functions.

Obviously, numerous modifications and variations of the present invention are possible in light of the above teachings. It is therefore to be understood that within the scope of the appended claims, the invention may be practiced otherwise than as specifically described herein.

## Claims

1. An information-processing apparatus connected to a terminal through a network, comprising:
a network interface configured to communicate with the network; and
a processing unit configured to,
select a target file to be operated from electronic files stored in the terminal,
provide a prescribed web page displaying an area for selecting an operation item from multiple operation items to be executed on the target file, and
select an operation for the target file based on the operation item selected using the prescribed web page.

2. The information-processing apparatus according to claim 1, wherein the prescribed web page displays the area for selecting an operation item from multiple operation items to be executed to the target file with other display areas.

3. The information-processing apparatus according to claim 1, wherein the selected operation is a print operation.

4. The information-processing apparatus according to claim 1, wherein the selected operation is a delivery operation

5. The information-processing apparatus according to claim 1, wherein the selected operation is a data conversion operation

6. The information-processing apparatus according to claim 1, wherein the selected operation is a facsimile transmission operation

7. The information-processing apparatus according to claim 1, further comprising:
a memory configured to temporarily store target files sent from the terminal, the processing unit being configured to execute the selected operation item by temporarily storing the target file sent from the terminal in the memory.

8. The information-processing apparatus according to claim 1, wherein the processing unit transmits information through the network to an external device to initiate execution of the operation item selected from the multiple operation items.

9. A method of performing an operation on a target file in a terminal, comprising:
selecting a target file from multiple electronic files stored in the terminal;
transmitting the target file through a network;
providing a web page through the network to the terminal displaying an area for selecting an operation item from multiple operation items to be applied to the target file; and
selecting an operation for the target file using the web page.

10. The method of claim 9, wherein providing the web page includes displaying the area for selecting an operation item with other display areas on the web page.

11. The method of claim 9, wherein selecting an operation includes selecting a print operation

12. The method of claim 9, wherein selecting an operation includes selecting a delivery operation

13. The method of claim 9, wherein selecting an operation includes selecting a data conversion operation

14. The method of claim 9, wherein selecting an operation includes selecting a facsimile transmission operation

15. The method of claim 9, further comprising:
executing the selected operation item by temporarily storing the transmitted target file.

16. The method of claim 9, further comprising:
transmitting information through the network to an external device to initiate execution of the selected operation item.

17. A computer program product stored in a computer readable storage medium for carrying out a method of performing an operation on a target file in a terminal connected to a network, when run on an information-processing apparatus, performs the steps of:
providing a first web page through a network to the terminal to allow selection of a target file from multiple electronic files stored in the terminal;
providing a second web page through the network to the terminal displaying an area for selecting an operation item from multiple operation items to be applied to the target file; and
selecting an operation for the target file using the second web page.

18. The program product according to claim 17, wherein providing the second web page includes displaying the area for selecting an operation item with other display areas on the second web page.

19. The program product according to claim 17, wherein selecting an operation includes selecting a print operation.

20. The program product according to claim 17, wherein selecting an operation includes selecting a delivery operation.

21. The program product according to claim 17, wherein selecting an operation includes selecting a data conversion operation.

22. The program product according to claim 17, wherein selecting an operation includes selecting a facsimile transmission operation.

23. The program product according to claim 17, when run on an information-processing apparatus, further performs:
executing the selected operation item by temporarily storing the target file.

24. The program product according to claim 17, when run on an information-processing apparatus, further performs:
transmitting information through the network to an external device to initiate execution of the selected operation item.

25. An information processing apparatus connected to a terminal through a network, comprising:
means for providing a front web page through the network to the terminal to allow selection of a local file stored in the terminal;
means for receiving a selected local file from the terminal through the network;
means for providing a second web page through the network to the terminal to allow selection of an operation to be performed on the local file; and
means for initiating through the network an operation selected via the second web page on a local file selected via the first web page.

26. The information processing apparatus of claim 25, further comprising:
means for providing a third web page through the network to the terminal to provide status information regarding the selected operation.
